Europäisches Patentamt

**European Patent Office**

**Office européen des brevets**

(11) Numéro de publication : **0 063 062**
**B1**

(12) **FASCICULE DE BREVET EUROPÉEN**

(45) Date de publication du fascicule du brevet :
28.05.86

(21) Numéro de dépôt : **82400478.2**

(22) Date de dépôt : **16.03.82**

(51) Int. Cl.⁴ : **F 16 J 15/54**, F 04 D 1/12,
F 04 D 29/10

(54) **Dispositif d'étanchéité pour machine rotative à fluide hydraulique.**

(30) Priorité : **08.04.81 FR 8107065**

(43) Date de publication de la demande :
**20.10.82 Bulletin 82/42**

(45) Mention de la délivrance du brevet :
**28.05.86 Bulletin 86/22**

(84) Etats contractants désignés :
**BE DE GB IT NL**

(56) Documents cités :
**DE-A- 2 632 649**
**FR-A- 632 014**
**FR-A- 2 340 490**
**FR-A- 2 452 039**
**GB-A- 1 334 478**
**GB-A- 1 350 752**
**GB-A- 2 061 416**
**US-A- 2 917 329**

(73) Titulaire : **Legoy, Auguste**
**12bis, rue René Coty**
**F-76290 Montivilliers (FR)**

**Legoy, Claude**
**5, rue Hippolyte Fenoux**
**F-76620 Le Havre (FR)**

(72) Inventeur : **Legoy, Auguste**
**12bis, rue René Coty**
**F-76290 Montivilliers (FR)**
Inventeur : **Legoy, Claude**
**5, rue Hippolyte Fenoux**
**F-76620 Le Havre (FR)**

(74) Mandataire : **Jolly, Jean-Pierre et al**
**Cabinet BROT 83, rue d'Amsterdam**
**F-75008 Paris (FR)**

Jouve, 18, rue St-Denis, 75001 Paris, France

## Description

La présente invention concerne un dispositif d'étanchéité pour machine rotative à fluide hydraulique.

Par le brevet FRA-2 340 490 on connaît un dispositif d'étanchéité pour machines rotatives, à fluide liquide ou gazeux, comportant un arbre sortant d'un carter et monté de manière à pouvoir tourner dans celui-ci, avec des moyens d'étanchéité servant à rendre l'arbre étanche au repos et un joint à liquide formé d'un anneau de liquide dans une cavité qui est limitée vers l'extérieur en direction radiale par une paroi d'un corps rotatif relié rigidement de l'arbre et vers l'intérieur en direction radiale par une paroi d'un élément en forme manchon relié rigidement au carter et espacé de l'arbre, l'anneau de liquide étant poussé vers l'extérieur contre ladite paroi du corps rotatif par la force centrifuge en vertu du mouvement de rotation, ledit espacement entre l'élément en forme de manchon et l'arbre constituant un canal alimenté par un fluide, limité à l'extrémité tournée vers le carter par lesdits moyens d'étanchéité et débouchant à l'autre extrémité dans une chambre d'étanchéité annulaire qui entoure l'arbre, le dispositif d'étanchéité comprenant en outre une amenée de fluide pour alimenter ladite chambre d'étanchéité, de laquelle un parcours de fuite mène à ladite cavité, ainsi qu'un dispositif hydraulique de régulation de pression, tel qu'un tube de Pitot, qui maintient dans la chambre d'étanchéité une pression supérieure à la pression de fluide dans la machine hydraulique, de sorte que lorsque l'arbre tourne, l'étanchéité desdits moyens d'étanchéité est supprimée.

Le liquide excédentaire de l'anneau liquide est réintégré dans la chambre annulaire d'étanchéité, laquelle reste toujours remplie de liquide qui assure l'étanchéité de la machine.

Lesdits moyens d'étanchéité sont constitués par un joint circulaire porté par l'élément en forme de manchon et pourvu d'une lèvre qui, au repos, s'applique sur l'arbre. En fonctionnement, la pression dans la chambre annulaire est suffisante pour décoller le joint annulaire de l'arbre. Ainsi, en fonctionnement de la machine, l'étanchéité est assurée par le liquide contenu dans ladite chambre, et au repos, elle est assurée par le joint annulaire.

Un tel joint annulaire a un comportement satisfaisant dans le cas d'une machine ou pompe contenant un fluide hydraulique relativement neutre, froid ou à une température et à une pression modérées. Mais il s'agit d'un gaz ou même d'un liquide actif, par exemple un liquide corrosif, nocif, ou porté à une haute température et une pression élevée, l'étanchéité assurée au repos par un tel joint est nettement insuffisante. C'est le cas par exemple dans les applications à l'énergie nucléaire, ou au traitement de produits chimiques dangereux, pour lesquels l'étanchéité en fonctionnement comme au repos doit être absolument parfaite.

Un premier but de l'invention est donc d'apporter une solution au problème de l'étanchéité des machines rotatives contenant de tels liquides.

On rappelle encore que le fluide d'étanchéité utilisé dans le dispositif d'étanchéité selon le brevet mentionné est constitué par le liquide même qui est contenu dans la machine ou la pompe. Dans le cas d'une pompe centrifuge, le liquide est prélevé du côté refoulement de la pompe et est introduit dans la chambre annulaire par l'intermédiaire d'une canalisation comprenant une soupape pour le réglage du débit prélevé. On comprend que, dans le cas où il s'agit de liquides chargés de particules en suspension, celles-ci finissent rapidement par encrasser la chambre annulaire d'étanchéité et la cavité du corps rotatif et par obstruer le tube de Pitot.

Un deuxième but de la présente invention est de remédier à cet inconvénient des machines rotatives contenant des liquides chargés.

On rappelle encore que selon un autre mode de réalisation du dispositif d'étanchéité du brevet sus-mentionné, appliqué au cas où la pression d'aspiration de la pompe est négative, le joint annulaire est supprimé puisque même à l'arrêt, il serait décollé, laissant le liquide du dispositif d'étanchéité regagner l'aspiration de la pompe. A la place du joint, le manchon porte un diaphragme de diamètre légèrement supérieur à celui de l'arbre de manière à restreindre le passage entre la chambre annulaire et l'aspiration. Le liquide d'étanchéité est directement introduit dans la cavité du corps rotatif à travers un canal percé dans le manchon, et par l'intermédiaire d'une buse dont l'orifice est obturé par une lame ressort dont l'extrémité libre se trouve dans le trajet de l'anneau liquide contenu dans le corps rotatif et est orientée dans le sens de déplacement dudit anneau, de sorte qu'elle subit les actions antagonistes de la pression de l'anneau liquide et celle du liquide injecté par la buse. L'ouverture de la buse est réglée pour que l'épaisseur de l'anneau liquide soit constante. Toute augmentation de cette épaisseur rompt l'équilibre de la lame ressort et l'équilibre n'est rétabli que lorsque le tube de Pitot, qui est choisi avec un débit supérieur aux débits de fuite à travers les deux diaphragmes a refoulé le liquide excédentaire vers la chambre annulaire. Un joint à lèvre élastique est monté sur le bord interne de la pièce annulaire plate du corps rotatif et se serre, à l'arrêt de la pompe, sur le manchon de manière à empêcher toute entrée d'air dans la pompe.

Un troisième but de la présente invention est de simplifier la structure de ce dispositif d'étanchéité tout en le rendant plus efficace.

Un quatrième but de l'invention est de prévoir des moyens destinés à encaisser les chocs hydrauliques, tels que coups de bélier, qui s'exercent sur les pompes, en particulier au moment du démarrage.

La présente invention a donc pour objet de remédier aux inconvénients susmentionnés du dispositif d'étanchéité du brevet susmentionné et propose à cet effet un dispositif d'étanchéité à très haute efficacité, et qui en même temps puisse être très simplement adapté sur les machines rotatives à fluide hydraulique.

L'invention concerne donc un dispositif d'étanchéité du type défini précédemment, et qui se caractérise en ce qu'entre le bord périphérique interne libre du corps rotatif et la paroi contiguë du manchon autour duquel il s'adapte, est monté un joint d'étanchéité fixe en rotation, solidaire du manchon, mais mobile axialement par rapport à celui-ci, ledit joint comprenant un corps annulaire qui s'adapte avec un faible jeu autour du manchon, un joint à lèvres tourné du côté de la cavité du corps tournant et susceptible de s'appliquer de façon étanche sur la surface extérieure du manchon, et une saillie radiale annulaire logée à l'intérieur d'une rainure annulaire formée dans ledit bord périphérique du corps rotatif et dont les dimensions sont supérieures à celles de ladite saillie, de manière à éviter tout frottement de la saillie sur le corps rotatif, en rotation.

Ainsi à l'arrêt, sous l'action de la pression exercée par le fluide contenu dans le corps rotatif, le joint d'étanchéité est repoussé axialement et s'applique contre la paroi latérale de la rainure, assurant de ce fait l'étanchéité radiale du dispositif, tandis que le joint à lèvres assure l'étanchéité axiale au niveau du manchon.

Le joint d'étanchéité est empêché de tourner, mais est autorisé à se déplacer axialement le long du manchon, au moyen d'un ergot solidaire du manchon ou du carter et faisant saillie dans une fente axiale prévue sur le corps annulaire du joint.

Avantageusement, le bord périphérique libre du corps rotatif est conformé de part et d'autre de la rainure en paroi tronconique de même axe que l'arbre et qui s'écarte de l'arbre à mesure qu'elle pénètre dans la cavité du corps tournant. De cette manière, en cas de fuite à travers le joint, le liquide est appliqué contre ladite paroi tronconique et, sous l'action de la force centrifuge, il glisse le long de cette paroi vers l'intérieur du corps tournant et est réintégré dans l'anneau liquide.

Selon un autre perfectionnement de l'invention, les parois internes de la pièce en forme de coupe et de la pièce annulaire plate constituant le corps rotatif, sont pourvues d'ailettes radiales et axiales permettant un meilleur entraînement de l'anneau liquide. L'expérience a montré que la prévision de ces ailettes a permis d'améliorer considérablement les performances du tube de Pitot et par suite l'efficacité du manchon liquide selon l'invention.

Afin de faciliter la fabrication et le montage du dispositif d'étanchéité, le manchon est réalisé en deux pièces, à savoir : une première pièce montée coaxialement autour de l'arbre, dans l'orifice du carter par lequel l'arbre sort et une deuxième pièce solidarisée de la première, par exemple par vissage, et qui fait saillie à l'intérieur de la cavité du corps rotatif et porte le tube de Pitot.

Selon un autre perfectionnement de l'invention, le manchon présente un diamètre interne nettement supérieur à celui de l'arbre, la chambre annulaire définie entre le manchon et l'arbre recevant une bague flottante destinée à absorber les chocs hydrauliques s'exerçant sur la machine, ladite bague ayant un diamètre interne supérieur à celui de l'arbre et étant pourvue à ses extrémités de diaphragmes faisant un faible jeu avec l'arbre de façon à permettre sa libre rotation tout en limitant les fuites du liquide d'étanchéité vers la machine et vers le corps rotatif, ladite bague flottante étant immobile en rotation et en translation axiale par rapport au manchon, mais étant mobile radialement.

A cet effet, la bague flottante s'appuie par ses extrémités contre deux faces radiales formées sur le manchon, avec interposition d'un joint d'étanchéité, un ergot solidaire d'une desdites faces radiales faisant saillie à l'intérieur d'une fente formée à l'extrémité adjacente de la bague flottante et de hauteur radiale surdimensionnée afin que la bague soit libre de se déplacer radialement.

Dans la chambre annulaire comprise entre le manchon et la bague flottante débouchent d'une part, un canal percé dans le manchon ou le carter est relié à une source de liquide d'étanchéité extérieure et d'autre part, l'orifice de sortie du tube de Pitot. D'autre part, le passage annulaire compris entre la bague flottante et l'arbre communique, respectivement à travers les deux diaphragmes, avec la machine et avec la cavité du corps rotatif.

Le liquide d'étanchéité peut être soit prélevé du côté refoulement de la pompe, soit fourni par une source de liquide indépendante, par l'intermédiaire d'un régulateur de pression dont le réglage tient compte des caractéristiques du dispositif d'étanchéité.

L'utilisation d'un liquide d'étanchéité indépendant s'impose notamment dans le cas où le liquide de la machine est chargé.

Dans le cas où la pression à l'orifice de captage du tube de Pitot est supérieure à la pression côté machine, on prévoit dans la bague flottante au moins un trou qui fait communiquer entre elles la chambre comprise entre l'arbre et la bague flottante, et la chambre comprise entre cette dernière et le manchon. Etant donné que cette seconde chambre est sensiblement à la pression régnant à l'orifice de captage du tube de Pitot, le débit de fuite s'effectuera correctement depuis ladite seconde chambre vers la machine, et non dans le sens inverse.

Au contraire, dans le cas où ladite pression est inférieure à la pression côté machine, la bague flottante ne doit pas comporter de trou, car si elle en avait, la pression côté machine serait communiquée à travers le diaphragme et ledit trou, au tube de Pitot, lequel se bloquerait. D'autre part, le corps rotatif se remplirait de liquide et le joint d'étanchéité serait en charge et fuirait. L'excédent de liquide d'étanchéité écopé par le tube de Pitot sur l'anneau liquide est refoulé de la chambre annulaire d'étanchéité vers une capacité extérieure.

L'invention sera mieux comprise à la lecture de la description détaillée qui va suivre, de plusieurs modes de réalisation de l'invention, donnés à titre d'exemple non limitatif, en regard des dessins annexés dans lesquels :

les figures 1 à 3 sont des vues partielles en coupe axiale de trois modes de réalisation différents du dispositif d'étanchéité selon l'invention ;

les figures 4a et 4b montrent deux combinaisons possibles du dispositif d'étanchéité de la figure 1 avec une garniture mécanique ;

la figure 5 montre une vue en coupe radiale d'une variante de réalisation du dispositif d'étanchéité, et

la figure 6 est une vue en coupe axiale du dispositif d'étanchéité selon l'invention, appliqué au cas de l'étanchéité d'une machine à fluide gazeux, telle qu'un compresseur ou une turbine à vapeur.

Dans la description qui va suivre, on supposera que la machine sur laquelle le dispositif d'étanchéité est monté, est une pompe centrifuge, mais il va de soi que l'invention s'applique à toute machine rotative contenant un liquide quelconque, qui peut éventuellement être chargé ou pur, visqueux ou fluide, nocif ou inoffensif, froid ou porté à très haute température et pression élevée.

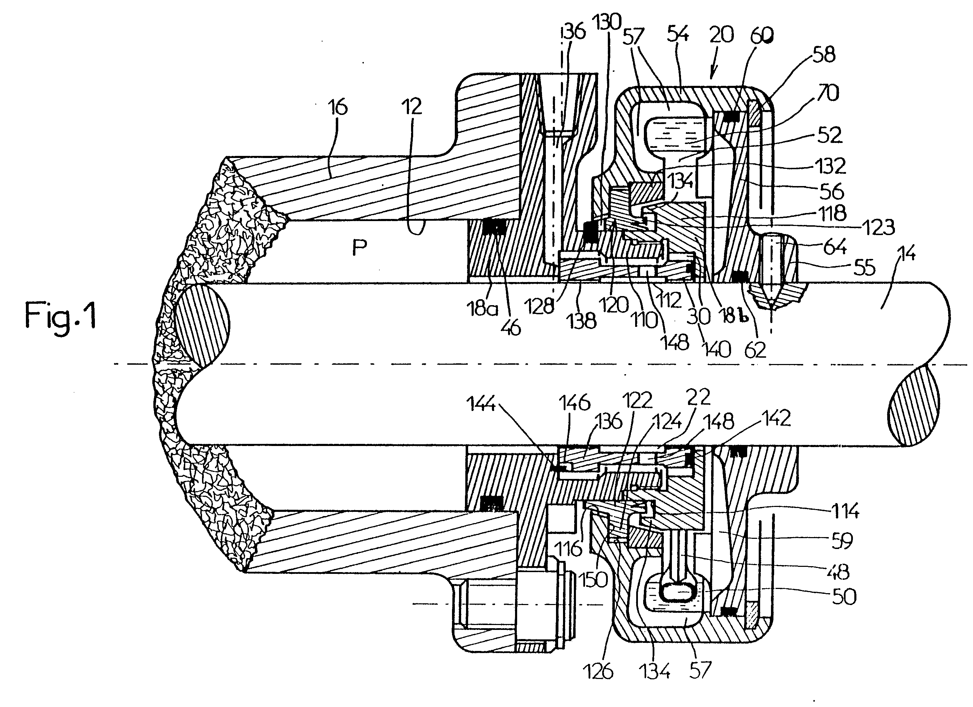

Dans le mode de réalisation de la figure 1, le manchon annulaire est formé en deux pièces, à savoir : une première pièce 18a montée coaxialement autour de l'arbre 14 de la pompe, et fixée avec interposition d'un joint d'étanchéité 46, à l'intérieur de l'orifice 12 par lequel l'arbre sort du carter 16, et une seconde pièce 18b faisant saillie à l'intérieur de la cavité 52 du corps rotatif 20 et qui est solidarisée de la pièce 18a, par vissage de deux portions tubulaires 110, 112, appartenant auxdites pièces et qui forment extérieurement une surface cylindrique continue 114.

Le corps rotatif 20 comprend une pièce en forme de coupe 54 et une pièce annulaire sensiblement plate 56 avec un moyeu 55. Cette dernière est emmanchée autour de l'arbre 14 et fixée au moyen d'une vis 64, ou autre moyen de même efficacité, un joint torique 62 assurant l'étanchéité. La pièce en forme de coupe 54 est solidarisée de la pièce 56 par son bord extérieur au moyen d'un circlip 58 et avec interposition d'un joint 60. Le bord périphérique interne 116 de la pièce en forme de coupe 54 vient en regard de la surface continue 114 et d'une bride annulaire radiale 118 faisant saillie sur la pièce 18b vers l'intérieur de la cavité 52.

Il est évident que les positions des pièces 54 et 56 peuvent être interverties. La pièce en forme de coupe serait fixée à l'arbre 14 et la pièce plate viendrait se placer en regard de la surface 114 du manchon 18a, 18b. Pour améliorer l'entraînement de l'anneau liquide qui se forme à la périphérie externe de la cavité 52, la pièce cupulaire 54 comporte des ailettes axiales et radiales 57 et la pièce plate 56 comporte des ailettes radiales 59.

Entre le bord périphérique interne 116 de la pièce 54 (ou de la pièce 56 dans le cas de la variante de réalisation susmentionnée) et la surface 114 est monté un joint d'étanchéité non tournant 120. Celui-ci comprend un corps annulaire 122 qui s'adapte avec un léger jeu autour de la surface 114 et une saillie annulaire radiale 124 qui vient se loger à l'intérieur d'une rainure annulaire 126 formée sur le bord périphérique 116 de la pièce en forme de coupe 54. Entre les parois de la saillie 124 et celles de la rainure 126 subsiste un faible jeu de manière à éviter tout frottement pendant la rotation du corps rotatif. le corps annulaire 122 du joint porte un joint à lèvres 123 qui assure l'étanchéité avec le manchon 18a, 18b. Le joint 120 peut donc se déplacer axialement, sur le manchon. Par contre, il est solidarisé en rotation de ce dernier au moyen d'un ergot 128 faisant saillie à l'intérieur d'une fente axiale 130 formée sur le corps 120 du joint. Son montage est facilité par le fait que l'une des parois de la rainure 126 est constituée par une bague 132 qui est fixée sur la pièce en forme de coupe 54 après que le joint a été mis en place.

Comme on l'a déjà expliqué, afin de réduire les fuites à travers le joint 120, le bord périphérique 116 de la pièce 54 est conformé en surface tronconique de même axe que l'arbre 14 et s'inclinant vers l'arbre à mesure qu'elle s'éloigne de la cavité 52 du corps rotatif 20. D'autre part, les lèvres du joint 120 sont tournées du côté de la cavité 52 et s'imbriquent avec un ergot annulaire 134 faisant saillie sur la pièce 18b pour former un trajet sinueux à grande perte de charge.

La pièce 18b porte le tube de Pitot 48. L'orifice de captage 50 de celui-ci est situé dans la cavité 52 du corps rotatif 20, au voisinage de la périphérie externe de ladite cavité et son orifice de sortie débouche dans la chambre annulaire 30 formée entre les pièces 18a, 18b et l'arbre 14.

Dans ladite chambre annulaire 30 est montée une bague flottante 136 de diamètre interne supérieur au diamètre de l'arbre 14 et de diamètre externe inférieur au diamètre interne des pièces 18a, 18b. La bague est pourvue à ses extrémités de diaphragmes 138, 140 faisant un faible jeu avec l'arbre 14. L'arbre 14 peut donc tourner librement, en même temps que les fuites de liquide d'étanchéité vers le corps tournant 20 et vers la pompe sont limitées. La bague flottante présente donc un degré de liberté radiale, ce qui lui permet d'absorber les chocs hydrauliques se manifestant dans le dispositif d'étanchéité. Par contre, elle est immobilisée en rotation et en translation axiale, par le fait qu'elle s'insère entre deux parois radiales appartenant aux pièces 18a et 18b, et séparées par une distance légèrement supérieure à la longueur de la bague. L'étanchéité ainsi que le rattrapage du jeu sont assurés par un joint torique 142. Un ergot 144 solidaire de l'une des pièces 18a ou 18b fait saillie dans une encoche 146 formée à l'extrémité adjacente de la bague. La hauteur radiale de l'encoche est suffisamment grande pour que la bague puisse se déplacer radialement sans être gênée par l'ergot 144.

La chambre annulaire 30 communique avec le passage tubulaire 22 défini entre l'arbre 14 et la bague flottante 136 à travers plusieurs trous 148 percés dans cette dernière. Le passage tubulaire 22 communique à travers les diaphragmes 138 et 140 avec le côté aspiration de la pompe et avec la cavité 52.

Dans la chambre 30 débouche le canal 36, par lequel le liquide d'étanchéité est amené. Ce liquide peut être constitué par le liquide même de la pompe, prélevé du côté refoulement. Cependant, dans le cas où ce liquide est chargé, il est préférable d'utiliser un liquide indépendant non chargé, fourni par une source de liquide, par l'intermédiaire d'un régulateur de pression.

Le dispositif d'étanchéité de la figure 1 fonctionne de la façon suivante :

Lorsque la pompe est à l'arrêt, le corps rotatif 20 est rempli de liquide d'étanchéité sous pression, ce qui empêche toute entrée d'air dans la pompe. En raison de la différence de pression qui s'exerce sur ses deux faces, le joint d'étanchéité est repoussé vers la gauche sur la figure 1 et appliqué contre la paroi radiale 150 de la rainure 126, assurant ainsi l'étanchéité du joint. Dès que la pompe se met à tourner, le liquide d'étanchéité, sous l'action de la force centrifuge, est déporté à la périphérie externe de la cavité 52, où il forme un anneau liquide 70. La pression dans la cavité devenant sensiblement égale à la pression atmosphérique, le joint d'étanchéité se décolle de la paroi 150 et vient occuper une position pour laquelle il ne frotte sur aucune des parois de la rainure 126, de sorte que le mouvement de rotation de l'arbre 14 et du corps rotatif 20 n'est pas freiné.

Le régulateur de pression est réglé pour que le passage 22 soit maintenu à une pression supérieure à la pression P régnant du côté aspiration de la pompe.

Deux cas sont à envisager dans le fonctionnement du dispositif d'étanchéité.

1. La pression à l'orifice de captage 50 du tube de Pitot est supérieure à ladite pression P. Le liquide d'étanchéité arrivant dans la chambre annulaire 30 gagne le passage annulaire 22 à travers les trous 148 et donne lieu à des faibles débits de fuite à travers les diaphragmes 138, 140 vers la pompe et vers le corps rotatif 20. Le débit de fuite vers le corps rotatif est projeté à la périphérie de la cavité et vient grossir l'anneau liquide 70. Lorsque l'orifice de captage 50 du tube de Pitot est complètement noyé, celui-ci intervient pour établir un équilibre entre la pression régnant dans la chambre annulaire 30 et la pression résultant de la force centrifuge de l'anneau liquide 70. Une fois cet équilibre atteint, toute augmentation de l'épaisseur de l'anneau liquide 70 crée un déséquilibre et le volume de liquide correspondant à cette augmentation est transféré par le tube de Pitot 48 vers la chambre 30, d'où il s'écoule vers la machine, à travers les trous 148 et le diaphragme 138.

Ainsi, le liquide contenu dans le passage tubulaire 22 constitue un véritable joint d'étanchéité, empêchant toute fuite de la pompe vers l'extérieur. Le liquide d'étanchéité réchauffé en raison de sa rotation est refroidi au contact du liquide frais contenu dans la chambre 30.

2. La pression à l'orifice de captage 50 est inférieure à la pression P. Dans ce cas, la bague flottante 136 ne doit pas comporter de trous 148. Si elle en avait, la pression P serait communiquée à travers le diaphragme 138 et les trous 148, à la chambre 30 et donc à l'orifice de sortie du tube de Pitot, lequel se bloquerait. Au contraire, si les trous 148 sont obturés, la chambre 30 n'est pas en surpression et le tube de Pitot peut donc fonctionner normalement. L'excédent de liquide arrivant à la chambre 30 est refoulé vers une capacité extérieure, non représentée.

Le dispositif d'étanchéité qui vient d'être décrit peut être monté aussi bien sur toute machine rotative à fluide hydraulique nouvellement construite que sur les machines rotatives déjà existantes, utilisant un moyen d'étanchéité classique, tel que presse-étoupe, ou fouloirs commandés par des vis. La pièce 18a du manchon sera par exemple insérée dans la boîte à tresses.

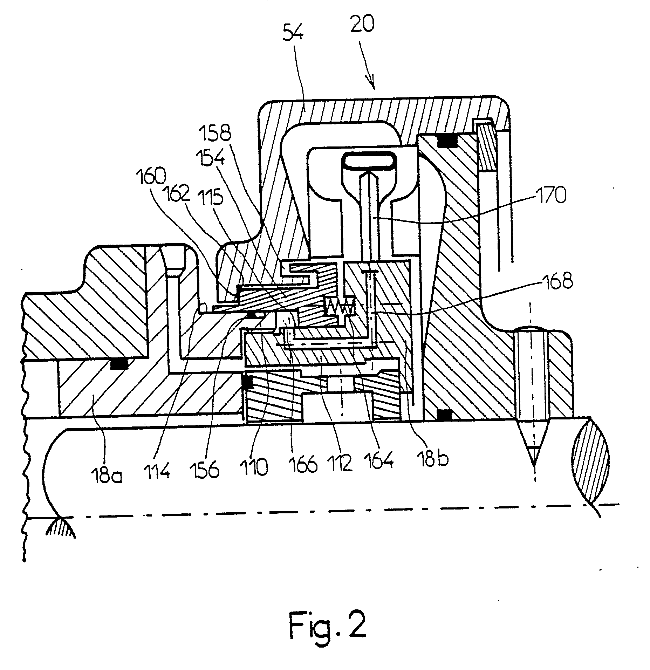

Le dispositif d'étanchéité illustré sur la figure 2 est plus particulièrement destiné aux cas où l'on désire assurer une étanchéité à l'arrêt de haute sécurité du corps rotatif 20. On ne décrira ci-après en détail que les éléments nouveaux du dispositif d'étanchéité.

Le manchon tubulaire est ici aussi réalisé en deux pièces 18a et 18b, se terminant par des portions tubulaires 110, 112 par lesquelles elles sont solidarisées, par vissage. La portion tubulaire 112 a un diamètre externe inférieur à celui de la portion tubulaire 110.

Dans l'intervalle compris entre le bord périphérique interne de la pièce en forme de coupe 54 et les surfaces externes en gradin 114 et 115 des portions tubulaires 110 et 112 est monté coulissant axialement un clapet à piston annulaire 154 à la place du joint d'étanchéité 120 du mode de réalisation de la figure 1. Le clapet à piston 154 présente deux parois cylindriques internes de diamètres respectivement égaux aux diamètres externes des portions tubulaires 110, 112, un joint torique 156 assurant l'étanchéité entre les parois en contact. La paroi extérieure du clapet à piston 154 présente un profil découpé qui s'imbrique avec jeu dans un profil complémentaire formé sur le bord périphérique interne de la pièce en forme de coupe 56 de manière à définir un passage étroit en zigzag 158 à grande perte de charge, destiné à limiter les fuites. Plus particulièrement, le clapet à piston comporte sur sa paroi extérieure, une surface annulaire 160 située dans un plan radial, et le bord périphérique de la pièce 54 comporte un siège annulaire 162 également situé dans un plan radial en regard de la surface 160 et qui peut être éventuellement métallisé. Des ressorts 164 ou autres moyens équivalents s'appuyant sur la pièce 18b et sur le clapet à piston 154, sollicitent celui-ci vers la droite sur la figure 2. Le clapet à piston définit avec les portions tubulaires 110 et 112 une chambre 166 dans laquelle débouche un canal 168 relié à un second tube de Pitot 170 de même forme et de mêmes caractéristiques que le tube de Pitot 48, non représenté sur la figure 2.

En rotation, le second tube de Pitot 170 alimente et met en pression la chambre 166, ce qui provoque le déplacement axial du clapet à piston 154 de quelques dixièmes de millimètres, à l'encontre de la force des ressorts 164, décollant ainsi le clapet à piston de son siège 162 et éliminant de ce fait tout frottement entre les pièces fixes et les pièces tournantes.

A l'arrêt, la chambre 166 n'est plus soumise à la pression, de sorte que les ressorts 164 rappellent le clapet à piston 154 vers sa position initiale, mettant en contact la face 160 avec son siège 162. La pompe est de ce fait complètement isolée de l'extérieur.

Pour le reste, le dispositif d'étanchéité fonctionne de la même façon que celui du mode de réalisation de la figure 1.

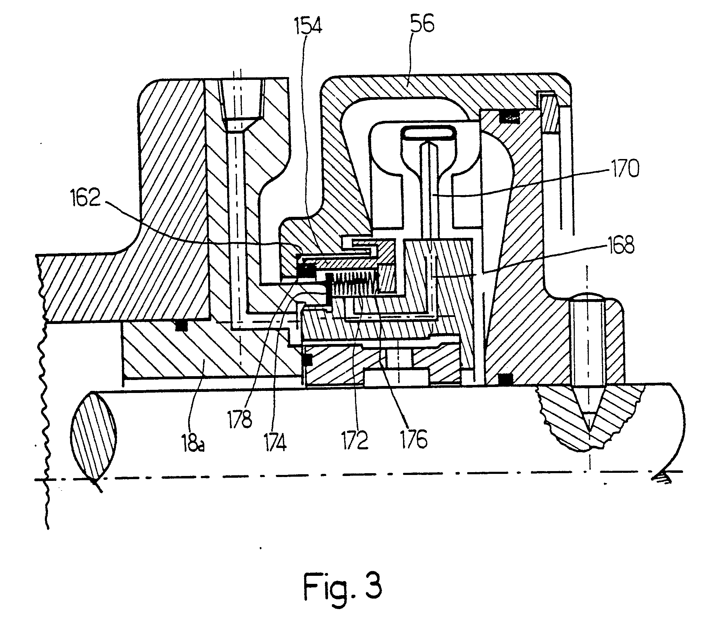

Le mode de réalisation de la figure 3 diffère de celui de la figure 2 par le fait que le clapet à piston annulaire 154 est évidé à sa périphérie interne et reçoit dans l'évidement ainsi formé un soufflet annulaire 172 ou un dispositif équivalent, fixé par ses extrémités sur une face radiale 174 de la pièce 18a du manchon tubulaire et sur une face radiale 176 du clapet à piston 154. Le canal 168 qui est relié au second tube de Pitot 170 débouche à l'intérieur du soufflet 172. Sur la paroi extérieure du soufflet s'exerce la pression atmosphérique.

En rotation, le second tube de Pitot 170 met en pression la chambre intérieure ou soufflet 172, ce qui provoque l'extension de celui-ci et donc le déplacement du clapet à piston 154 vers la droite sur la figure 3 et par conséquent le décollement du joint 178 de son siège 162 sur la pièce en forme de coupe 54. Tout frottement est de ce fait éliminé.

A l'arrêt, la chambre intérieure au soufflet 172 n'est plus sous pression, de sorte que celui-ci se rétracte, ramenant le clapet à piston 154 à sa position initiale, avec le joint 178 appliqué contre le siège 162.

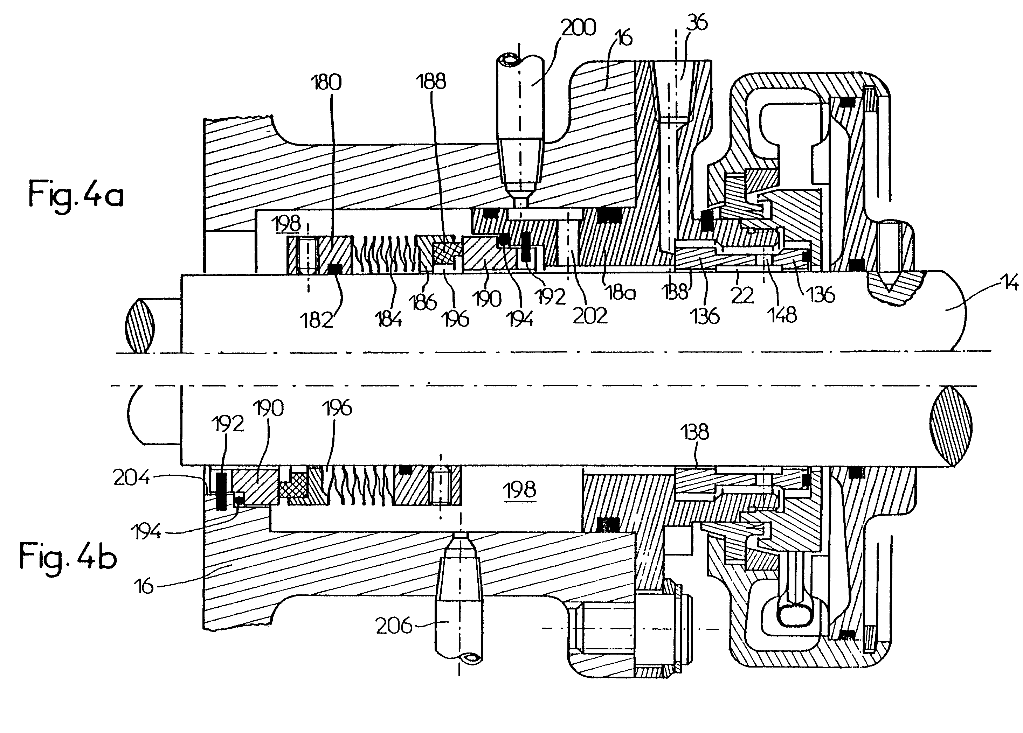

Les figures 4a et 4b représentent deux combinaisons possibles du dispositif d'étanchéité de la figure 1 avec une garniture mécanique.

Une telle combinaison d'étanchéité par joint liquide et par garniture mécanique permet d'obtenir des étanchéités très difficiles à obtenir autrement, notamment dans le cas de liquides chargés, toxiques, nocifs, irradiés, gazeux, etc.

On ne décrira pas ci-après le dispositif d'étanchéité par joint liquide puisqu'il est identique à celui de la figure 1, mais uniquement les garnitures mécaniques. On notera d'autre part, que ces garnitures mécaniques peuvent aussi bien être montées en combinaison avec le dispositif d'étanchéité selon l'une des figures 2 et 3.

Les garnitures mécaniques des figures 4a et 4b isolent complètement le dispositif d'étanchéité à joint liquide, lequel fonctionne alors comme un dispositif autonome avec un fluide neutre.

Avec référence à la figure 4a, la garniture mécanique comprend d'une part, une première bague 180 fixée autour de l'arbre 14 du côté machine rotative, au moyen d'une vis, un joint torique 182 assurant l'étanchéité, un soufflet 184 entourant l'arbre 14 et fixé par ses extrémités sur la première bague 180 et sur une seconde bague 186 faisant un faible jeu avec l'arbre et qui porte un joint annulaire latéral 188 sans contact avec l'arbre, et d'autre part, une troisième bague 190 faisant un faible jeu avec l'arbre et solidarisée de la pièce fixe de manchon 18a au moyen d'un ergot 192 qui autorise de légers déplacements axiaux de la bague 190 par rapport à la pièce 18a. Un joint torique 194 assure l'étanchéité entre la bague 190 et la pièce 18a pendant les déplacements axiaux de ladite bague.

Ainsi, l'ensemble de la bague 180, du soufflet 184, de la bague 186 et du joint latéral 188 est solidaire de l'arbre et tourne donc avec lui, tandis que la bague 190 est fixe. Le joint latéral 188 est maintenu en contact frottant avec la bague 190 par le soufflet 184 sans jamais se décoller. Il en résulte que l'espace intérieur 196 à la garniture mécanique est en communication avec le passage tubulaire 22 du dispositif d'étanchéité, mais complètement isolé de l'espace extérieur 198 qui communique avec la machine hydraulique. Le liquide d'étanchéité alimente ledit espace intérieur 196 à travers les trous 148 et le diaphragme 138 de la bague flottante 136, et est ramené à la source de liquide par une tubulure 200 raccordée à un canal 202 percé dans le carter 16 et dans la pièce 18a. Il va de soi que le liquide d'étanchéité peut être introduit par la tubulure 200 et évacué par la canalisation 36.

Ainsi, la garniture assure l'étanchéité du tronçon d'arbre 14, compris entre la bague 180 et la bague flottante 136 du dispositif d'étanchéité.

Dans la variante de réalisation de la figure 4b, la garniture d'étanchéité comporte les mêmes éléments que précédemment, mais fixés de manière que l'espace intérieur 196 de la garniture soit cette fois-ci en communication avec la machine et que l'espace extérieur 198 soit en communication avec le dispositif d'étanchéité. A cet effet, la bague 190 est fixée au moyen de l'ergot dans l'ouverture 204 du carter, le joint 194 assurant l'étanchéité au niveau de ladite ouverture, tandis que la bague 180 est fixée avec étanchéité sur l'arbre du côté dispositif d'étanchéité. Le liquide d'étanchéité est introduit dans l'espace 198, à travers le diaphragme 138 et est ramené à la source d'alimentation par une tubulure 206.

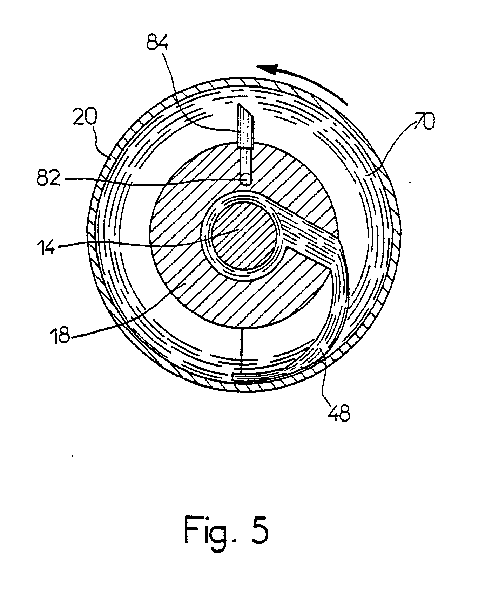

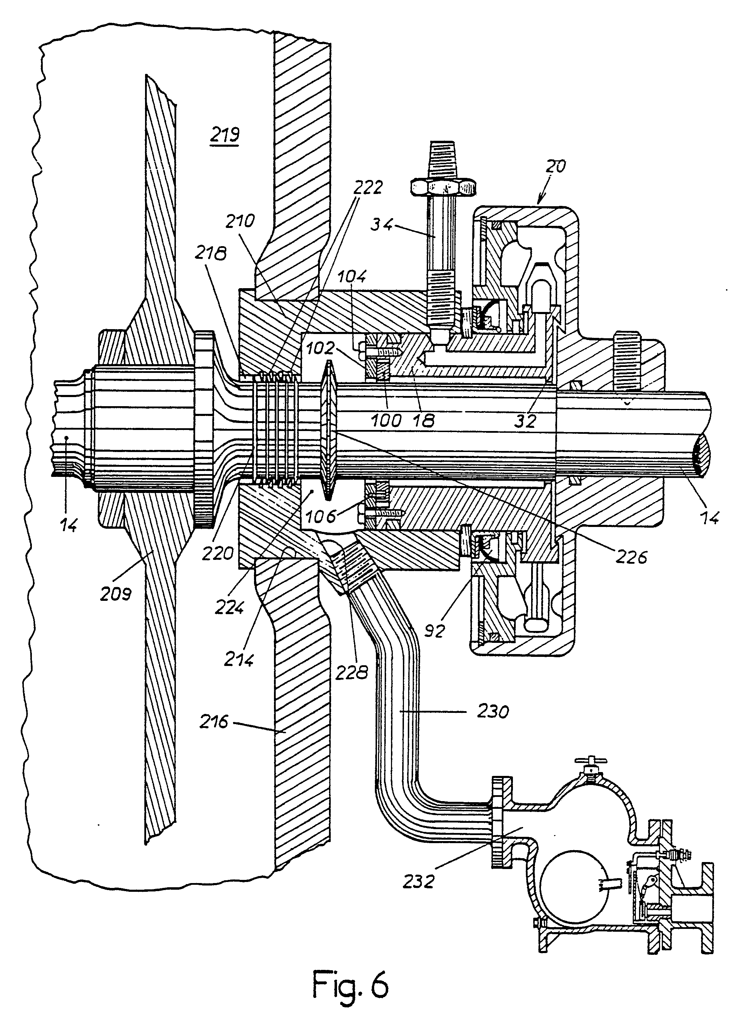

La figure 5 représente une autre variante de réalisation du dispositif d'étanchéité. Une buse 84 (voir également figure 6), qui débouche dans la cavité du corps rotatif, peut alimenter l'anneau liquide 70 directement. Il suffit de remplacer pour cela la vanne qui se trouve sur la canalisation de fluide d'alimentation de la chambre d'étanchéité par un régulateur de pression ou détendeur branché sur le canal 82.

L'orifice de la buse 84 est sollicité simultanément par des actions antagonistes de contre-pression de l'anneau liquide et joue aussi un rôle de second tube de Pitot, puisque l'augmentation de l'épaisseur de l'anneau liquide fait monter la pression dans le canal d'alimentation de l'anneau liquide, ce qui sollicite le régulateur de pression ou le détendeur, qui intervient pour ajuster automatiquement le débit compensateur en maintenant constante l'épaisseur de l'anneau liquide.

Avec référence à la figure 6, on décrira à présent une application du dispositif d'étanchéité selon l'invention aux machines rotatives à vapeur ou à gaz, telles que compresseurs ou turbines à vapeur.

Le dispositif d'étanchéité comprend un manchon 18 de diamètre intérieur supérieur à celui de l'arbre et solidarisé du carter par tout moyen connu. La cavité du corps rotatif 20 est alimentée par le liquide de refoulement de la machine, par l'intermédiaire d'une canalisation, non représentée, connectée à un raccord 34, et du passage 82 percé dans le manchon et de la buse 84 qui débouche dans ladite cavité. L'orifice de la buse 84 est commandé par une lame ressort fixée sur le manchon.

Le manchon se termine à son extrémité qui porte le tube de Pitot par un diaphragme 32 qui restreint la section du passage de la chambre d'étanchéité vers la cavité du corps rotatif. A son autre extrémité, le manchon porte une bague flottante 100 de diamètre interne légèrement supérieur au diamètre de l'arbre 14.

La pièce annulaire sensiblement plate du corps rotatif 20 est équipée sur sa périphérie interne d'un joint à lèvre 92 qui, lorsque la pompe est à l'arrêt, se serre sur le manchon 18, ce qui évite une entrée d'air dans le corps rotatif et donc le désamorçage de la machine. La bague flottante 100 est maintenue contre les mouvements axiaux par une bride 102 vissée sur le manchon 18 par des vis 104. Un ergot 106 empêche la bague flottante de tourner.

Le dispositif d'étanchéité est fixé sur le compresseur ou la turbine en engageant le manchon 18 dans la boîte étanche 210. A cet effet, on supprimera les deux tiers de l'étanchéité classique à labyrinthes ou bagues de carbone. Le corps rotatif 20 sera fixé sur l'arbre 14 du compresseur ou de la turbine. Sur l'arbre 14 est calé le rotor 209 de la turbine.

La boîte étanche 210 est fermée par un fond 212 encastré dans une ouverture 214 du carter 216. Ledit fond présente un orifice 218 traversé avec jeu par l'arbre 14 de la turbine. Des chicanes 220, 222 formées sur l'arbre et sur la paroi de l'orifice 218 définissent un trajet en zigzag ou labyrinthe destiné à limiter les fuites de vapeur depuis l'espace intérieur 219 du carter 216 vers une chambre 224 de réception des fluides définie entre l'extrémité du manchon 18, l'arbre 14 et la boîte étanche 210 et à s'opposer à l'introduction de liquide à l'intérieur du carter.

La portion d'arbre comprise à l'intérieur de la chambre de réception 224 porte un déflecteur 226 destiné à éjecter le débit de fuite de liquide à travers la bague flottante 100 vers la périphérie de la chambre de réception 224. A la partie la plus basse de cette dernière est percé un orifice 228 dans lequel s'adapte une canalisation 230 reliée à un purgeur 232, par exemple du type à flotteur, à écoulement progressif et continu.

Le dispositif d'étanchéité est alimenté par de l'eau, laquelle peut être fournie par un circuit indépendant ou être prélevée sur le circuit de réfrigération des paliers, non représenté. Il est encore possible de prélever une partie de cette eau sur le purgeur 232.

Dans le cas de compresseurs, le dispositif d'étanchéité devra être alimenté avec de l'huile.

En fonctionnement, la vapeur sous pression provenant de l'intérieur du carter 216 alimente un débit de fuite à travers le labyrinthe 220, 222, vers la chambre de réception 224. La fuite d'eau à travers la bague flottante 100 se trouve éjectée par le déflecteur 226 sur la périphérie de la chambre 224. L'eau est ensuite collectée par le tube 230 et récupérée par le purgeur 232.

Etant donné que la pression à l'intérieur de la chambre de réception 224 est identique à celle régnant à l'intérieur du carter 216, l'eau contenue dans la chambre 224 ne peut rentrer dans l'espace intérieur 219, ce qui permet un débit de fuite constant de vapeur à travers le labyrinthe, puisque la vapeur se condense au contact de l'eau dans la chambre 224.

Grâce au purgeur, l'eau se trouve évacuée au fur et à mesure de sa formation. Il n'existe donc en fonctionnement, aucun risque de pénétration d'eau à l'intérieur du carter. C'est donc de la vapeur saturante qui est contenue dans la chambre de réception 224, dans la canalisation 230 et dans une partie du purgeur 232. L'eau débitée par le purgeur peut être récupérée dans des circuits adéquats.

Un des avantages du dispositif d'étanchéité qui vient d'être décrit est de permettre d'économiser l'eau distillée et la vapeur, et de protéger efficacement les paliers, car, comme on le sait, le point faible de ces machines réside dans le fait que l'eau peut pénétrer dans les paliers.

Le dispositif d'étanchéité est maintenu sous pression à l'arrêt grâce au joint d'étanchéité 92. Comme on le sait, à l'arrêt, les turbines à vapeur sont toujours en réchauffage, ce qui ne pose donc pas de problèmes d'étanchéité, à condition que le dispositif d'étanchéité soit lui aussi alimenté en permanence. Cette condition est réalisée puisque l'eau qui sert à la réfrigération de la turbine est fournie par un réseau.

**Revendications**

1. Dispositif d'étanchéité pour machines rotati-ves, à fluide hydraulique, comportant un arbre (14) sortant d'un carter (16) et monté de manière à pouvoir tourner dans celui-ci, avec des moyens d'étanchéité servant à rendre l'arbre étanche au repos et un joint à liquide formé d'un anneau de liquide (70) dans une cavité (52) qui est limitée vers l'extérieur en direction radiale par une paroi (54) d'un corps rotatif (20) relié rigidement à l'arbre et vers l'intérieur en direction radiale par une paroi d'un élément en forme manchon (18a, 18b) relié rigidement au carter et espacé de l'arbre, l'anneau de liquide étant poussé vers l'extérieur contre ladite paroi du corps rotatif par la force centrifuge en vertu du mouvement de rotation, ledit espacement entre l'élément en forme de manchon et l'arbre constituant un canal (22) alimenté par un fluide, limité à l'extrémité tournée vers le carter par lesdits moyens d'étanchéité et débouchant à l'autre extrémité dans une chambre d'étanchéité annulaire (30) qui entoure l'arbre, le dispositif d'étanchéité comprenant en outre une amenée de fluide (36) pour alimenter ladite chambre d'étanchéité, de laquelle un parcours de fuite mène à ladite cavité (52), ainsi qu'un dispositif hydraulique de régulation de pression, tel qu'un tube de Pitot (48), qui maintient dans la chambre d'étanchéité une pression supérieure à la pression de fluide dans la machine hydraulique, de sorte que lorsque l'arbre tourne, l'étanchéité desdits moyens d'étanchéité est supprimée, caractérisé en ce qu'entre le bord périphérique interne libre (126) du corps rotatif (20) et la paroi contiguë du manchon (18a, 18b) autour duquel il s'adapte, est monté un joint d'étanchéité fixe en rotation (120), solidaire du manchon (18a, 18b), mais mobile axialement par rapport à celui-ci, ledit joint comprenant un corps annulaire (122) qui s'adapte avec un faible jeu autour du manchon, un joint à lèvres (123) tourné du côté de la cavité (52) du corps tournant (20) et susceptible de s'appliquer de façon étanche sur la surface extérieure du manchon, et une saillie radiale annulaire (124) logée à l'intérieur d'une rainure annulaire (126) formée dans ledit bord périphérique (116) du corps rotatif et dont les dimensions sont supérieures à celles de ladite saillie, de manière à éviter tout frottement de la saillie sur le corps rotatif, en rotation.

2. Dispositif d'étanchéité selon la revendication 1, caractérisé en ce que le manchon présente un diamètre interne nettement supérieur à celui de l'arbre (14), la chambre annulaire (30) définie entre le manchon (18a, 18b) et l'arbre (14) recevant une bague flottante (136) destinée à absorber les chocs hydrauliques s'exerçant sur la machine, ladite bague ayant un diamètre interne supérieur à celui de l'arbre et étant pourvue à ses extrémités de diaphragmes (138, 140) faisant un faible jeu avec l'arbre de façon à permettre sa libre rotation tout en limitant les fuites du liquide d'étanchéité vers la machine et vers le corps rotatif, ladite bague flottante étant immobile en rotation et en translation axiale par rapport au manchon, mais étant mobile radialement.

3. Dispositif d'étanchéité selon la revendication 2, caractérisé en ce que la bague flottante (136) s'appuie par ses extrémités contre deux faces radiales formées sur le manchon, avec interposition d'un joint d'étanchéité (142), un ergot (144) solidaire d'une desdites faces radiales faisant saillie à l'intérieur d'une fente (146) formée à l'extrémité adjacente de la bague flottante et de hauteur radiale surdimensionnée afin que la bague soit libre de se déplacer radialement.

4. Dispositif d'étanchéité selon l'une des revendications 2 et 3, caractérisé en ce que dans la chambre annulaire (30) comprise entre le manchon et la bague flottante débouchent d'une part, un canal (36) percé dans le manchon ou le carter et relié à une source de liquide d'étanchéité extérieure, et d'autre part, l'orifice de sortie du tube de Pitot (48).

5. Dispositif d'étanchéité selon l'une des revendications 2 à 4, caractérisé en ce que le passage annulaire (22) compris entre la bague flottante (136) et l'arbre communique, respectivement à travers les deux diaphragmes (138, 140), avec la machine et avec la cavité du corps rotatif.

6. Dispositif d'étanchéité selon l'une des revendications 2 à 5, appliqué au cas où la pression à l'orifice de captage du tube de Pitot est supérieure à la pression côté machine, caractérisé en ce que la bague flottante (136) présente au moins un trou (148) destiné à faire communiquer entre elles la chambre (22) comprise entre l'arbre (14) et la bague flottante (136) et la chambre (39) comprise entre cette dernière et le manchon.

7. Dispositif d'étanchéité selon l'une des revendications 2 à 5, appliqué au cas où la pression à l'orifice de captage du tube de Pitot est inférieure à la pression côté machine, caractérisé en ce que la bague flottante (136) ne comporte pas de trou, de sorte que l'orifice de sortie du tube de Pitot est isolé de la pression côté machine, l'excédent de liquide d'étanchéité écopé par le tube de Pitot (48) sur l'anneau liquide (70) étant évacué de la chambre d'étanchéité (30) vers une capacité extérieure.

8. Dispositif d'étanchéité selon l'une des revendications précédentes, caractérisé en ce que le manchon annulaire présente une surface externe en gradins (114, 115) ayant une face annulaire radiale tournée vers la cavité (52) du corps rotatif, et en ce que dans l'intervalle compris entre le manchon et le bord périphérique interne libre du corps rotatif est monté coulissant axialement un clapet à piston annulaire (154) présentant une paroi annulaire interne également en gradins, s'adaptant avec étanchéité sur la surface externe en gradins (114, 115) du manchon et une paroi annulaire externe à profil découpé qui s'imbrique avec jeu dans un profil complémentaire formé sur le bord périphérique interne libre du corps rotatif (20), ladite paroi annulaire externe du clapet à piston comprenant plus particulièrement une face annulaire radiale (160) tournée vers l'intervalle précité et située en regard d'un siège annulaire radial (162) formé sur ledit bord périphérique, ledit clapet à piston étant sollicité, à l'arrêt de la machine, par des moyens élastiques, tels que des ressorts (164) dans un sens tel que sa face annulaire radiale (160) vienne s'appliquer en contact étanche contre ledit siège (162), et en fonctionnement de la machine, par une pression agissant sur le clapet à piston à l'encontre de la force desdits moyens élastiques de façon à le décoller dudit siège.

9. Dispositif d'étanchéité selon la revendication 8, caractérisé en ce que ladite pression est fournie par un second tube de Pitot (170) dont l'orifice de captage est noyé dans l'anneau liquide du corps rotatif et dont le tube est connecté à un canal (168) percé à travers le manchon (18b) et débouchant dans une chambre (166) définie entre le profil annulaire interne en gradins du clapet à piston (154) et le profil annulaire externe en gradins du manchon.

10. Dispositif d'étanchéité selon l'une des revendications 8 et 9, caractérisé en ce que le clapet à piston (154) est évidé à sa périphérie interne et reçoit dans l'évidement ainsi formé un soufflet annulaire élastique (172) ou analogue, fixé de façon étanche par ses extrémités sur des parois annulaires radiales du clapet à piston et du manchon, la paroi extérieure du soufflet étant à la pression atmosphérique tandis que l'espace intérieur au soufflet communique par l'intermédiaire de ladite canalisation (168) avec ledit second tube de Pitot (170), la disposition étant telle qu'en fonctionnement, la pression communiquée à l'intérieur du soufflet provoque le déplacement du clapet à piston dans un sens pour lequel celui-ci se décolle dudit siège.

11. Dispositif d'étanchéité selon l'une des revendications précédentes, caractérisé en ce qu'il est utilisé en combinaison avec une garniture mécanique, susceptible d'isoler complètement un tronçon d'arbre situé entre le carter (16) et le dispositif d'étanchéité vis-à-vis de la machine.

12. Dispositif d'étanchéité selon la revendication 11, caractérisé en ce que la garniture mécanique comprend une première bague (180) fixée de façon étanche autour de l'arbre (14), une seconde bague (186) faisant un faible jeu avec l'arbre et portant un joint annulaire latéral (188), un soufflet annulaire (184) entourant l'arbre et fixé de façon étanche par ses extrémités sur la première et la seconde bagues, et une troisième bague (190) faisant un faible jeu avec l'arbre et fixée de façon étanche sur le manchon (18a), de manière que le joint latéral soit en permanence en contact frottant avec la troisième bague, le liquide d'étanchéité qui emplit l'espace (196) intérieur à la garniture étant introduit à travers le diaphragme (138) de la bague flottante (136) et évacué vers une capacité extérieure par un canal (202) percé à travers le manchon ou vice versa.

13. Dispositif d'étanchéité selon l'une des revendications 11 et 12, caractérisé en ce que ladite troisième bague (190) est fixée avec étanchéité dans une ouverture (204) communiquant avec l'intérieur du carter (16) de la machine tout en faisant un faible jeu avec l'arbre (14), le liquide d'étanchéité qui emplit l'espace (198) extérieur à ladite garniture étant introduit à travers le diaphragme (138) de la bague flottante (136) et évacué vers une capacité extérieure par une tubulure (206) débouchant dans ledit espace extérieur.

14. Dispositif d'étanchéité selon l'une des revendications précédentes, caractérisé en ce que le bord périphérique libre (116) du corps rotatif est conformé de part et d'autre de la rainure (126) en paroi tronconique de même axe que l'arbre (14) et qui s'écarte de l'arbre à mesure qu'elle pénètre dans la cavité (52) du corps tournant.

15. Dispositif d'étanchéité selon l'une des revendications précédentes, caractérisé en ce que les parois internes de la pièce en forme de coupe et de la pièce annulaire plate constituant le corps rotatif sont pourvues d'ailettes radiales (59) et axiales (57) permettant un meilleur entraînement de l'anneau liquide (70).

16. Dispositif d'étanchéité selon l'une des revendications précédentes, caractérisé en ce que la pièce annulaire plate (56) du corps rotatif comporte un moyeu (55) par lequel elle est fixée à l'arbre (14) et en ce que le bord périphérique interne (116) de la pièce en forme de coupe (54) entoure avec jeu le manchon, lesdites pièces étant solidarisées entre elles à leur périphérie externe au moyen d'un circlip (58) ou analogue.

17. Dispositif d'étanchéité selon la revendication 1, caractérisé en ce que le manchon est réalisé en deux pièces, à savoir : une première pièce (18a) montée coaxialement autour de l'arbre (14), dans l'orifice (12) du carter (16) par lequel l'arbre sort et une deuxième pièce (18b) solidarisée de la première, par exemple par vissage, et qui fait saillie à l'intérieur de la cavité (52) du corps rotatif et porte le tube de Pitot (48).

18. Dispositif d'étanchéité selon l'une des revendications précédentes, appliqué aux machines rotatives à vapeur ou gaz, telles que turbines à vapeur ou compresseurs centrifuges, caractérisé en ce que le manchon tubulaire (18) est emmanché avec étanchéité à l'intérieur de la boîte étanche (210) de la machine, le fond de ladite boîte étanche étant encastré avec étanchéité dans une ouverture (214) du carter de la machine et présentant un orifice (218) traversé avec jeu par l'arbre (14) de la machine, des chicanes (222) étant formées sur la paroi périphérique dudit orifice et sur la portion d'arbre qui traverse ce dernier de manière à définir un labyrinthe limitant les fuites de vapeur ou de gaz de la machine, une chambre de réception de fluides (224) étant formée à l'intérieur de la boîte étanche à la sortie de l'arbre dudit orifice, la portion d'arbre située dans ladite chambre portant un déflecteur (226) destiné à dévier vers la périphérie de la chambre (224) le débit de fuite du liquide du dispositif d'étanchéité, ledit liquide ainsi que la vapeur qui a fui à travers ledit orifice (218) et qui s'est condensée dans la chambre de réception étant ensuite évacués vers un purgeur (232).

19. Dispositif d'étanchéité selon la revendication 20, appliqué à une turbine à vapeur, caractérisé en ce que le liquide d'étanchéité est prélevé sur le purgeur (232).

20. Dispositif d'étanchéité selon l'une des revendications précédentes, caractérisé en ce que

que le liquide d'étanchéité est prélevé sur la machine rotative.

21. Dispositif d'étanchéité selon l'une des revendications 1 à 19, caractérisé en ce que le liquide d'étanchéité est fourni par une source de liquide indépendante, par l'intermédiaire d'un régulateur de pression dont le réglage tient compte des caractéristiques du dispositif d'étanchéité.

22. Dispositif d'étanchéité selon l'une des revendications précédentes, caractérisé en ce que le liquide d'étanchéité est constitué par un liquide neutre et indépendant de celui de la machine, exemple de l'eau fourni à partir d'un réservoir, par l'intermédiaire d'un régulateur de pression.

23. Dispositif d'étanchéité selon la revendication 18, appliqué à un compresseur, caractérisé en ce que le liquide d'étanchéité est constitué par de l'huile.

**Claims**

1. A sealing arrangement for rotary machines involving hydraulic fluid, comprising a shaft (14) which issues from a casing (16) and which is mounted in such a way that it can rotate therein, with sealing means for making the shaft fluid-tight in the rest condition, and a liquid-type seal formed by a ring of liquid (70) in a cavity (52) which is limited outwardly in a radial direction by a wall (54) of a rotary body (20) which is rigidly connected to the shaft and inwardly in a radial direction by a wall of a sleeve-like element (18a, 18b) which is rigidly connected to the casing and which is spaced from the shaft, the ring of liquid being urged outwardly against said wall of the rotary body by centrifugal force due to the rotary movement, said spacing between the sleeve-like element and the shaft forming a duct (22) fed by a fluid, limited at the end towards the casing by said sealing means and opening at the other end into an annular sealing chamber (30) which is disposed around the shaft, the sealing arrangement further comprising a fluid feed (36) for feeding said sealing chamber from which a leakage path leads to said cavity (52), and a hydraulic pressure regulating device such as a pitot tube (48), which maintains a pressure in the sealing chamber which is higher than the fluid pressure in the hydraulic machine, in such a way that, when the shaft rotates, the sealing effect of said sealing means is suppressed, characterised in that mounted between the free internal peripheral edge (126) of the rotary body (20) and the contiguous wall of the sleeve (18a, 18b) around which it is fitted is a non-rotatable sealing member (120) which is fixed with respect to the sleeve (18a, 18b) but which is movable axially with respect thereto, said sealing member comprising an annular body (122) which fits around the sleeve with a small clearance, a lip-type seal (123) which is directed towards the cavity (52) of the rotary body (20) and which is capable of bearing sealingly against the outside surface of the sleeve, and an annular radial projection portion (124) which is housed within an annular groove (126) formed in said peripheral edge (116) of the rotary body and the dimensions of which are greater than that of said projection portion, so as to avoid any friction of the projection portion against the rotary body in the course of rotation.

2. A sealing arrangement according to claim 1 characterised in that the inside diameter of the sleeve is markedly greater than that of the shaft (14), the annular chamber (30) defined between the sleeve (18a, 18b) and the shaft (14) receiving a floating ring (136) intended to absorb hydraulic shocks which are applied to the machine, said ring having an inside diameter which is greater than that of the shaft and being provided at its ends with diaphragms (138, 140) which form a small clearance from the shaft so as to permit free rotation thereof while limiting leakage of the sealing liquid towards the machine and towards the rotary body, said floating ring being fixed in respect of rotary movement and in respect of axial translatory movement with respect to the sleeve but being movable radially.

3. A sealing arrangement according to claim 2 characterised in that the floating ring (136) bears by way of its ends against two radial faces formed on the sleeve, with the interposition of a seal (142), a lug (144) which is fixed with respect to one of said radial faces projecting into a slot (146) formed at the adjacent end of the floating ring and of increased radial height so that the ring is free to move radially.

4. A sealing arrangement according to one of claims 2 and 3 characterised in that a duct (36) which is pierced in the sleeve or the casing and which is connected to an outside sealing liquid source, on the one hand, and on the other hand, the outlet orifice of the pitot tube (48), open into the annular chamber (30) provided between the sleeve and the floating ring.

5. A sealing arrangement according to one of claims 2 to 4 characterised in that the annular passage (22) between the floating ring (136) and the shaft communicates by way of the two diaphragms (138, 140) respectively with the machine and with the cavity in the rotary body.

6. A sealing arrangement according to one of claims 2 to 5 when used in a situation where the pressure at the sensing orifice of the pitot tube is higher than the pressure on the machine side, characterised in that the floating ring (136) has at least one hole (148) which is intended to form an intercommunication between the chamber (22) provided between the shaft (14) and the floating ring (136) and the chamber (39) provided between the latter and the sleeve.

7. A sealing arrangement according to one of claims 2 to 5 when used in a situation where the pressure at the sensing orifice of the pitot tube is lower than the pressure on the machine side, characterised in that the floating ring (136) does not have a hole so that the outlet orifice of the pitot tube is isolated from the pressure on the machine side, the excess of sealing liquid removed by the pitot tube (48) on the liquid ring (70) being discharged from the sealing chamber (30) to an outside tank.

8. A sealing arrangement according to one of the preceding claims characterised in that the annular sleeve has an outside surface with steps (114, 115), having a radial annular face which is towards the cavity (52) in the rotary body, and that axially slidably mounted in the space between the sleeve and the free inward peripheral edge of the rotary body is a valve (154) of annular piston type having an inside annular wall which is also of a stepped configuration, sealingly fitting to the outside stepped surface (114, 115) of the sleeve and an outside annular wall of cut-out configuration which engages with clearance into a complementary configuration formed on the free inside peripheral edge of the rotary body (20), said outside annular wall of the piston-type valve comprising more particularly an annular radial face (160) which is towards said space between the sleeve and the free peripheral edge of the rotary body and which is disposed facing an annular radial seat (162) formed on said peripheral edge, said piston-type valve being urged in the stopped condition of the machine, by resilient means such as springs (164), in a direction such that its annular radial face (160) comes into sealing contact against said seat (162) and, in operation of the machine, by a pressure acting on the piston-type valve against the force of said resilient means so as to move it away from said seat.

9. A sealing arrangement according to claim 8 characterised in that said pressure is provided by a second pitot tube (170) whose sensing orifice is immersed in the liquid ring of the rotary body and the tube of which is connected to a duct (168) pierced through the sleeve (18b) and opening into a chamber (166) defined between the annular inward stepped configuration of the piston-type valve (154) and the annular outward stepped configuration of the sleeve.

10. A sealing arrangement according to one of claims 8 and 9 characterised in that the piston-type valve (154) is recessed at its inward periphery and in the recess which is thus formed accommodates an annular resilient bellows (172) or the like, which is sealingly fixed by way of its ends on annular radial walls of the piston-type valve and the sleeve, the outside wall of the bellows being at atmospheric pressure while the space inside the bellows communicates with said second pitot tube (170) by way of said ducting (168), the arrangement being such that in operation the pressure communicated to the interior of the bellows causes displacement of the piston-type valve in a direction in order for it to move away from said seat.

11. A sealing arrangement according to one of the preceding claims characterised in that it is used in combination with a mechanical packing capable of completely isolating a portion of shaft disposed between the casing (16) and the sealing arrangement, with respect to the machine.

12. A sealing arrangement according to claim 11 characterised in that the mechanical packing comprises a first ring (180) sealingly fixed around the shaft (14), a second ring (186) which is disposed with a small clearance from the shaft and which carries a lateral annular seal (188), an annular bellows (184) disposed around the shaft and sealingly fixed by way of its ends to the first and second rings, and a third ring (190) which is disposed at a small clearance from the shaft and which is sealingly fixed on the sleeve (18a) in such a way that the lateral seal is permanently in rubbing contact with the third ring, the sealing liquid which fills the space (196) inside the packing being introduced by way of the diaphragm (138) of the floating ring (136) and discharged to an external tank by way of a duct (202), pierced through the sleeve or vice-versa.

13. A sealing arrangement according to one of claims 11 and 12 characterised in that said third ring (190) is sealingly fixed in an opening (204) communicating with the interior of the casing (16) of the machine, while forming a small clearance from the shaft (14), the sealing liquid which fills the space (198) outside said packing being introduced by way of the diaphragm (138) of the floating ring (136) and discharged to an outside tank by way of a pipe (206) which opens into said outside space.

14. A sealing arrangement according to one of the preceding claims characterised in that the free peripheral edge (116) of the rotary body is shaped on respective sides of the groove (126) as a frustoconical wall which has the same axis as the shaft (14) and which extends away from the shaft in proportion to its extending into the cavity (52) of the rotary body.

15. A sealing arrangement according to one of the preceding claims characterised in that the inside walls of the cup-shaped portion and the flat annular portion forming the rotary body are provided with radial and axial vanes (59 and 57 respectively) permitting better entrainment of the liquid ring (70).

16. A sealing arrangement according to one of the preceding claims characterised in that the flat annular portion (56) of the rotary body comprises a hub (55) by means of which it is fixed to the shaft (14) and that the inward peripheral edge (116) of the cup-shaped portion (54) surrounds the sleeve with clearance, said portions being fixed together at their outward periphery by means of a circlip (58) or the like.

17. A sealing arrangement according to claim 1 characterised in that the sleeve is made in two pieces, namely : a first piece (18b) mounted coaxially about the shaft (14) in the opening (12) of the casing (16) by way of which the shaft issues and a second piece (18b) which is fixed with respect to the first piece, for example by screw means, and which projects into the cavity (52) of the rotary body and carries the pitot tube (48).

18. A sealing arrangement according to one of the preceding claims when used on rotary steam or gas machines such as steam turbines or

centrifugal compressors characterised in that the tubular sleeve (18) is sealingly engaged into the fluid-tight housing (210) of the machine, the bottom of said fluid-tight housing (210) of the machine, the bottom of said fluid-tight housing being sealingly fitted into an opening (214) of the casing of the machine and having an opening (218) through which the shaft (14) of the machine extends with clearance, baffle means (222) being formed on the peripheral wall of said opening and on the portion of shaft which passes through the latter so as to define a labyrinth means limiting leakage of vapour or gas from the machine, a fluid receiving chamber (224) being formed within the fluid-tight housing at the location where the shaft comes out of said opening, the portion of shaft disposed in said chamber carrying a deflector (226) which is intended to divert towards the periphery of the chamber (224) the leakage flow of the liquid from the sealing arrangement, said liquid and the vapour which has leaked through said opening (218) and which is condensed in the receiving chamber then being discharged to a purge device (232).

19. A sealing arrangement according to claim 20 when applied to a steam turbine characterised in that the sealing liquid is taken off at the purge device (232).

20. A sealing arrangement according to one of the preceding claims characterised in that the sealing liquid is taken off at the rotary machine.

21. A sealing arrangement according to one of claims 1 to 19 characterised in that the sealing liquid is supplied by an independent liquid source by way of a pressure regulator, the regulation of which takes account of the characteristics of the sealing arrangement.

22. A sealing arrangement according to one of the preceding claims characterised in that the sealing liquid is formed by a neutral liquid independent of that of the machine, for example water supplied from a tank, by way of a pressure regulator.

23. A sealing arrangement according to claim 18 when applied to a compressor characterised in that the sealing liquid is formed by oil.

**Patentansprüche**

1. Dichtvorrichtung für Rotationsmaschinen mit hydraulischem Strömungsmittel, mit einer Welle (14), die aus einem Gehäuse (16) ragt und drehbar gelagert ist, mit einer Dichteinrichtung, die dazu dient, die Welle in Ruhelage abzudichten, und mit einer Flüssigkeits-Abdichtung, die durch einen Ring aus Flüssigkeit (70) in einer Ausnehmung (52) gebildet ist, die nach außen hin in radialer Richtung durch eine Wand (54) eines rotierenden Körpers (20) begrenzt ist, der fest mit der Welle verbunden ist, und die nach innen hin in radialer Richtung durch eine Wandung eines Elementes in Form einer Hülse (18a, 18b) begrenzt ist, welche fest mit dem Gehäuse im Abstand von der Welle verbunden ist, wobei der Ring aus Flüssigkeit gegen die Wand des rotierenden Körpers nach außen hin durch die Zentrifugalkraft gedrängt wird, die infolge der Drehung erzeugt wird, wobei der Abstand des Elements in Form einer Hülse von der Welle einen Kanal (22) bildet, der durch ein Strömungsmittel gespeist wird, der an dem in Richtung des Gehäuses weisenden Ende durch die Dichteinrichtung begrenzt ist und an dem anderen Ende in eine ringförmige Dichtkammer (30) mündet, die die Welle umgibt, wobei die Dichteinrichtung darüber hinaus eine Strömungsmittelzuführung (36) für die Versorgung der Dichtkammer aufweist, von welcher ein Ausfluß in die Ausnehmung (52) führt, und eine hydraulische Druckregelvorrichtung, wie ein Pitot-Rohr (48), die in der Dichtkammer einen Druck aufrechterhält, der höher als der Druck des Strömungsmittels in der hydraulischen Maschine ist, so daß jedesmal dann, wenn sich die Welle dreht, die Dichtwirkung der Dichteinrichtung überwunden wird, dadurch gekennzeichnet, daß zwischen dem inneren freien Umfangsrand (116) des rotierenden Körpers (20) und der gegenüberliegenden Wandung der Hülse (18a, 18b) diese umschließend eine in Umfangsrichtung feststehende Abdichtung (120) angeordnet ist, die mit der Hülse (18a, 18b) verbunden, jedoch gegenüber dieser axial beweglich ist, wobei die Abdichtung einen ringförmigen Körper (122), der die Hülse mit geringem Spiel umschließt, eine Lippendichtung (123), die, in Richtung der Ausnehmung (52) des rotierenden Körpers (20) weisend, sich abdichtend an die Außenfläche der Hülse legen kann, und einen ringförmigen, sich radial erstreckenden Vorsprung (124) aufweist, der im Inneren einer Ringnut (126) angeordnet ist, die in dem Umfangsrand (116) des rotierenden Körpers ausgebildet ist und deren Abmessungen derart größer als diejenigen des Vorsprungs sind, daß Reibung des Vorsprunges an dem rotierenden Körper bei der Drehung vollständig vermieden wird.

2. Dichtvorrichtung nach Anspruch 1, dadurch gekennzeichnet, daß die Hülse einen Innendurchmesser aufweist, der deutlich größer als derjenige der Welle (14) ist, daß die ringförmige Dichtkammer (30), die zwischen der Hülse (18a, 18b) und der Welle (14) ausgebildet ist, einen schwimmenden Ring (136) aufnimmt, der dazu bestimmt ist, die hydraulischen Stöße der Maschine zu absorbieren, wobei der schwimmende Ring einen größeren inneren Durchmesser als der Durchmesser der Welle aufweist und an seinen Enden mit Membranen (138, 140) versehen ist, welche ein geringes Spiel mit der Welle derart bilden, daß die freie Drehung der Welle ermöglicht wird, dabei aber der Ausfluß von Flüssigkeit aus der Dichtung zu der Maschine und zu dem rotierenden Körper hin begrenzt bzw. verhindert wird, und daß der schwimmende Ring hinsichtlich Drehung und Axialverschiebung gegenüber der Hülse unbeweglich, jedoch radial beweglich ist.

3. Dichtvorrichtung nach Anspruch 2, dadurch gekennzeichnet, daß der schwimmende Ring (136) an seinen Enden gegen zwei radiale Flächen abgestützt ist, die an der Hülse ausgebildet sind, wobei eine Abdichtung (142) dazwischen angeordnet ist, daß eine Nase (144) mit den radialen Flächen einen Vorsprung im Inneren eines Spaltes (146) bildet, welcher am Ende angrenzend an den schwimmenden Ring und in der radialen Höhe diesen überragend ausgebildet ist, damit der schwimmende Ring einen Freiraum für seine radiale Verlagerung erhält.

4. Dichtvorrichtung nach einem der Ansprüche 2 oder 3, dadurch gekennzeichnet, daß mit der ringförmigen Dichtkammer (30) zwischen der Hülse und dem schwimmenden Ring einerseits ein Kanal (36), der die Hülse oder das Gehäuse durchtritt und mit einer äußeren Dichtflüssigkeitsquelle verbunden ist, und andererseits die Austrittsöffnung des Pitot-Rohres (48) in Verbindung steht.

5. Dichtvorrichtung nach einem der Ansprüche 2 bis 4, dadurch gekennzeichnet, daß der ringförmige Kanal (22), der zwischen dem Schwimmkörper (136) und der Welle vorgesehen ist, über die beiden Membranen (138, 144) mit der Maschine bzw. mit der Ausnehmung in dem rotierenden Körper in Verbindung steht.

6. Dichtvorrichtung nach einem der Ansprüche 2 bis 5, wobei der Druck an der Einlaßöffnung des Pitot-Rohres größer als der maschinenseitige Druck ist, dadurch gekennzeichnet, daß der schwimmende Körper (136) mindestens ein Loch (148) aufweist, das dazu dient, eine Verbindung zwischen dem Kanal (22), der zwischen der Welle (14) und dem schwimmenden Ring (136) vorgesehen ist, und der Kammer (39), die zwischen dem letzteren und der Hülse vorgesehen ist, zu schaffen.

7. Dichtvorrichtung nach einem der Ansprüche 2 bis 5, wobei der Druck an der Einlaßöffnung des Pitot-Rohres kleiner als der maschinenseitige Druck ist, dadurch gekennzeichnet, daß der schwimmende Ring (136) kein Loch aufweist, so daß die Auslaßöffnung des Pitot-Rohres von dem maschinenseitigen Druck getrennt ist, und daß die Überschußflüssigkeit aus der Dichtung, die durch das Pitot-Rohr (48) an dem Ring aus Flüssigkeit (70) abgeschöpft wurde, aus der Dichtkammer (30) zu einem Außenraum geführt wird.

8. Dichtvorrichtung nach einem der vorhergehenden Ansprüche, dadurch gekennzeichnet, daß die ringförmige Hülse eine gestufte Außenoberfläche (114, 115) und eine ringförmige Stirnfläche zur Ausnehmung (52) des rotierenden Körpers hin aufweist, und daß in dem Zwischenraum, der zwischen der Hülse und dem inneren freien Umfangsrand des rotierenden Körpers vorgesehen ist, ein Ventil mit einem Ringkolben (154) axial verschiebbar gelagert ist, der eine ebenfalls gestufte ringförmige Innenwandung aufweist, auf der gestuften Außenoberfläche (114, 115) der Hülse dichtend geführt ist, und ferner eine ringförmige Außenwand mit einem hinterschnittenen Profil aufweist, das mit Spiel in ein Gegenprofil eingreift, welches an dem inneren Umfangsrand des rotierenden Körpers (20) ausgebildet ist, wobei die ringförmige Außenwand des Kolbenventils insbesondere eine radiale Stirnfläche (160) aufweist, die dem erwähnten Zwischenraum zugewandt ist und gegenüber einem ringförmigen Radialsitz (162) angeordnet ist, welcher in dem Umfangsrand ausgebildet ist, wobei das Kolbenventil beim Anhalten der Maschine durch eine elastische Vorrichtung wie beispielsweise Federn (164) in einer Richtung derart aktiviert wird, daß sich seine ringförmige Stirnfläche (160) dichtend gegen den Sitz (162) legt, und beim Arbeiten der Maschine durch einen Druck, der auf das Kolbenventil gegen die Kraft der elastischen Vorrichtung wirkt, derart aktiviert wird, daß es sich von dem Sitz abhebt.

9. Dichtvorrichtung nach Anspruch 8, dadurch gekennzeichnet, daß der Druck durch ein zweites Pitot-Rohr (170) geliefert wird, dessen Einlaßöffnung in den Ring aus Flüssigkeit des rotierenden Körpers eintaucht und bei welchem das Rohr mit einem Kanal (168) verbunden ist, welcher die Hülse (18b) durchsetzt und eine Ausnehmung zu einer Kammer (166) hin aufweist, die zwischen dem inneren gestuften Ringprofil des Kolbenventils (154) und dem äußeren gestuften Ringprofil der Hülse gebildet ist.

10. Dichtvorrichtung nach einem der Ansprüche 8 und 9, dadurch gekennzeichnet, daß das Kolbenventil (154) an seinem inneren Umfang durchbrochen ist und in der so ausgebildeten Ausnehmung einen ringförmigen, insbesondere elastischen Einsatz (172) od. dgl. aufnimmt, der dichtend an seinen Enden an den ringförmigen radialen Wänden des Kolbenventils und der Hülse befestigt ist, daß die äußere Wandung des Einsatzes sich unter atmosphärischem Druck befindet, während der Innenraum des Einsatzes über den Kanal (168) mit dem zweiten Pitot-Rohr (170) in Verbindung steht, und daß die Anordnung derart gewählt ist, daß beim Betrieb der Maschine der Druck, der mit dem Inneren des Einsatzes in Verbindung steht, eine Verschiebung des Kolbenventils in einer Richtung hervorruft, bei welcher das Kolbenventil den Ventilsitz verläßt.

11. Dichtvorrichtung nach einem der vorhergehenden Ansprüche, dadurch gekennzeichnet, daß die Dichtvorrichtung in Verbindung mit einer mechanischen Einheit verwendet wird, um einen Wellenstummel vollständig abzudichten, welcher sich zwischen dem Gehäuse (16) und der Dichtvorrichtung gegenüber der Maschine befindet.

12. Dichtvorrichtung nach Anspruch 11, dadurch gekennzeichnet, daß die mechanische Einheit einen ersten Ring (180), der dichtend am Umfang der Welle (14) angeordnet ist, einen zweiten Ring (186), der eine Spielpassung zu der der Welle aufweist und eine ringförmige Lateraldichtung (188) trägt, einen ringförmigen Einsatz (184), welcher die Welle umgibt und dichtend an seinen Enden auf dem ersten und dem zweiten Ring angeordnet ist, und einen dritten Ring (190) aufweist, der eine Spielpassung zu der Welle hin aufweist und dichtend an der Hülse (18a) angeordnet ist, wobei die Lateraldichtung dauernd in Reibschluß mit dem dritten Ring verbleibt, die Dichtflüssigkeit, die den Raum (196) innerhalb der mechanischen Einheit anfüllt, durch die Membran (138) des schwimmenden Ringes (136) eintritt und zu einem Außenraum über einen Kanal (202) abgeführt wird, welcher die Hülse durchtritt, oder umgekehrt.

13. Dichtvorrichtung nach einem der Ansprüche 11 und 12, dadurch gekennzeichnet, daß der dritte Ring (190) dichtend in einer Öffnung (204) befestigt ist, die mit dem Innenraum des Gehäuses (16) der Maschine in Verbindung steht und die Welle (14) mit geringem Spiel umschließt, und daß die Dichtflüssigkeit, die den Raum (198) außerhalb der Einheit füllt, über die Membran (138) des schwimmenden Ringes (136) eingeführt und in einen Außenraum durch einen Stutzen oder Rohransatz (206) herausgeführt wird, welcher eine Öffnung zu dem Außenraum hin bildet.

14. Dichtvorrichtung nach einem der vorhergehenden Ansprüche, dadurch gekennzeichnet, daß der freie Umfangsrand (116) des rotierenden Körpers mit der Ringnut (126) kegelstumpfförmig und koaxial mit der Welle (14) ausgebildet ist und sich von der Welle in Richtung der Ausnehmung (52) des drehenden Körpers entfernt.

15. Dichtvorrichtung nach einem der vorhergehenden Ansprüche, dadurch gekennzeichnet, daß die Innenwände des schalenförmigen Teiles und des flachen ringförmigen Teiles des rotierenden Körpers sich radial erstreckende (59) und sich axial erstrekkende Rippen (57) aufweisen, die eine bessere Mitnahme des Ringes aus Flüssigkeit (70) ermöglichen.

16. Dichtvorrichtung nach einem der vorhergehenden Ansprüche, dadurch gekennzeichnet, daß das flache ringförmige Teil (56) des rotierenden Körpers eine Nabe (55) zur Befestigung an der Welle (14) aufweist, und daß der innere Umfangsrand (116) des schalenförmigen Teiles (54) mit Spiel die Hülse umgibt, wobei die Teile miteinander an ihrem Außenumfang mittels eines Sicherungsringes (58) o. dgl. verbunden sind.

17. Dichtvorrichtung nach Anspruch 1, dadurch gekennzeichnet, daß die Hülse zwei Teile aufweist, nämlich ein erstes Teil (18a), das koaxial um die Welle (14) in der Öffnung (12) des Gehäuses (16), durch welche die Welle hindurchtritt, angeordnet ist, und ein zweites Teil (18b), das mit dem ersten, beispielsweise mittels einer Schraubverbindung, verbunden ist und das einen Vorsprung zum Inneren der Ausnehmung (52) des rotierenden Körpers bildet und das Pitot-Rohr (48) trägt.

18. Dichtvorrichtung nach einem der vorhergehenden Ansprüche, für die Anwendung bei mit Dampf oder Gas arbeitenden Rotationsmaschinen, wie Dampfturbinen oder Kreiselkompressoren, dadurch gekennzeichnet, daß die rohrförmige Hülse (18) dichtend mit dem Innenraum des dichten Gehäuses (210) der Maschine verbunden ist, wobei der Boden des dichten Gehäuses dichtend in eine Öffnung (214) des Maschinengehäuses eingebaut ist und eine Ausnehmung (218) bildet, durch die sich die Welle (14) der Maschine mit Spiel erstreckt, daß Stauelemente (222) bzw. eine Labyrinthdichtung an der Umfangswand der Ausnehmung und auf dem zugeordneten Bereich der Welle derart ausgebildet sind, daß sie den Ausfluß von Dampf oder Gas aus der Maschine begrenzen, daß eine Aufnahmekammer für Strömungsmittel (224) im Inneren des dichten Gehäuses an dem Ausgang der Welle durch die Ausnehmung ausgebildet ist, daß der Bereich der Welle, der sich in der Kammer befindet, eine Schleuderscheibe (226) trägt, die aus der Dichtvorrichtung austretende Flüssigkeit zum Umfang der Kammer (224) hin lenkt, und daß die Flüssigkeit wie auch der Dampf, der durch die Öffnung (218) hindurch geströmt ist und sich in der Aufnahmekammer niederschlägt, daraufhin zu einem Kondensattopf (232) abgesaugt wird.

19. Dichtvorrichtung nach Anspruch 20, für eine Dampfturbine, dadurch gekennzeichnet, daß die Dichtflüssigkeit dem Kondensattopf (232) entnommen wird.

20. Dichtvorrichtung nach einem der vorhergehenden Ansprüche, dadurch gekennzeichnet, daß die Dichtflüssigkeit der Rotationsmaschine entnommen wird.

21. Dichtvorrichtung nach einem der Ansprüche 1 bis 19, dadurch gekennzeichnet, daß die Dichtflüssigkeit von einer unabhängigen Flüssigkeitsquelle über einen Druckregler zugeführt wird, dessen Regelcharakteristik den Eigenschaften der Dichtvorrichtung Rechnung trägt.

22. Dichtvorrichtung nach einem der vorhergehenden Ansprüche, dadurch gekennzeichnet, daß die Dichtflüssigkeit eine neutrale und von der Maschine unabhängige Flüssigkeit, beispielsweise Wasser, ist, das aus einem Vorratsbehälter über einen Druckregler zugeführt wird.

23. Dichtvorrichtung nach Anspruch 18, für die Anwendung an einem Kompressor, dadurch gekennzeichnet, daß die Dichtflüssigkeit Öl ist.

Fig.1

0 063 062

Fig. 2

Fig. 3

Fig. 4a

Fig. 4b

Fig. 5

Fig. 6